# EUROPEAN PATENT APPLICATION

(11) **EP 4 844 967 A1**
(43) Date of publication of application: **25.11.2026**
(21) Application number: 26180321.7
(22) Date of filing: 21.05.2026
(51) Int. Cl.: H02G 5/04, H02G 5/08

(54) **ELECTRICAL BUSWAY RAIL PHASE TRANSPOSITION DEVICES**

(30) Priority: 22.05.2025 US 202563810200 P; 19.05.2026 US 202619681197
(71) Applicant: Eaton Intelligent Power Limited, Dublin 4 (IE)
(72) Inventor: RATHOD, Varuneshwar, 431705 Hingoli (IN); SONAWANE, Abhishek Dilip, Simpsonville, 29681 (US); LAWLOR, Walter James, Hodges, 29653 (US)
(74) Representative: Collingwood-Pierce, Alexandra Isobel Seymour

(57) **Abstract**

Disclosed herein are phase transposition devices (200). The described phase transposition devices (200) are configured to couple multi-phase rails having different orientations in a single bus run segment. In one example, the multi-phase rails are configured as three-phase rails with an A conductor, a B conductor, a C conductor (and potentially an N conductor) arranged according to the respective orientation of each rail. Non-limiting examples of orientations include front-facing vertical, rear-facing vertical, front-facing horizontal, and rear-facing horizontal. The phase transposition devices (200) can implement a phase transposition of 90 degrees or 360 degrees. The phase transposition device (200) includes extensions (211, 212) for coupling to the rails (101a, 101b) and an internal connection assembly (230, 260) configured to electrically couple the corresponding current phases of internal portions of the extensions (for instance, connecting the A phases, the B phases, and so on). Other embodiments are described.

## Description

### CROSS REFERENCE TO RELATED APPLICATION

This application claims priority to U.S. Provisional Patent Application Serial No. 63/810,200, filed on May 22, 2025 and titled "ELECTRICAL BUSWAY RAIL PHASE TRANSPOSITION DEVICES," the disclosure of which is incorporated herein by reference.

### TECHNICAL FIELD

The present disclosure is directed to a busway or bus duct electrical distribution system, and, in particular, to devices for implementing phase transposition for multi-phase busway rails.

### BACKGROUND

A busway is a prefabricated electrical distribution system that uses bus bars arranged in a protective enclosure (conduits or ducts) to transport electricity and connect to electrical equipment such as switchgear, panelboards, and transformers. In a track-style busway, the conduit is formed as segments of fixed-length rails that provide electrical connections for tap-off boxes having receptacles that allow for power distribution to equipment below or adjacent to the rail segment. Track-style busways are common in data centers, but are also prevalent in laboratories, warehouses, and manufacturing facilities, among other applications.

Rail segments can be installed in different orientations, including horizontal, vertical, front-facing, and/or rear-facing, depending on various factors, including power needs, load position, structural support, and/or space constraints. The arrangement of phase conductors in a rail is different in each orientation. As a result, rails in different orientations cannot be connected together in a busway run using conventional couplers or feed devices because the phase conductors would not be properly connected to the corresponding phase. Therefore, in conventional systems, track-style busways require a new bus run if there is a need to change the rail orientation. As a result, changing the orientation of a rail using existing busway equipment is time-consuming, increases costs, and requires valuable space within the constrained confines of typical busway power distribution systems.

### SUMMARY

This Summary is provided to introduce a selection of concepts in a simplified form that are further described below in the Detailed Description. This Summary is not intended to identify key features or essential features of the claimed subject matter, nor is it intended as an aid in determining the scope of the claimed subject matter.

The present disclosure describes various embodiments of phase transposition devices configured to couple multi-phase rails having different orientations in a single bus run segment. In some embodiments, the multi-phase rails are configured as three-phase rails with an A conductor, a B conductor, and a C conductor (and potentially an N conductor) arranged according to the respective orientation of each rail. Non-limiting examples of orientations include front-facing vertical (FFV), rear-facing vertical (RFV), front-facing horizontal (FFH), and rear-facing horizontal (RFH).

In some embodiments, the phase transposition devices may implement a phase transposition of 90 degrees or 360 degrees. For example, in various embodiments, a phase transposition device may be configured to electrically couple a first rail in a vertical orientation with a second rail in a horizontal orientation. In another example, in some embodiments, a phase transposition device may be configured to electrically couple a first rail in a front-facing orientation with a second rail in a rear-facing orientation.

In one embodiment, a phase transposition device may be configured for connecting a first rail to a second rail to form a busway run in a three-phase electrical busway system, in which the first rail is configured in a first orientation and the second rail is configured in a second orientation, with the first orientation being different than the second orientation. The phase transposition device may include a body having a first connection side and a second connection side arranged opposite the first connection side; a first connection extension extending from the first connection side, the first connection extension having a first conductor assembly including a first plurality of conductors positioned corresponding to the first orientation; a second connection extension extending from the second connection side, the second connection extension having a second conductor assembly including a second plurality of conductors positioned corresponding to the second orientation; and an internal connection component configured to electrically couple corresponding conductors of the first plurality of conductors and the second plurality of conductors within an internal cavity of the body.

The phase transposition device may include an internal connection component (or assembly of components) configured to electrically couple the different phases of internal portions of the conductor assemblies of the differently-orientated rails, with the related phase conductors connected to each other (connecting the A conductors, the B conductors, and so on). In some embodiments, the internal connection component may include one or more of flexible copper or aluminum braids, solid copper connectors, or casted copper connectors.

In one example, a phase transposition device for connecting a pair of rails in a busway electrical system includes a housing having an upstream side and a downstream side arranged opposite the upstream side; an upstream connection extension extending from the upstream side and configured to be electrically coupled to an upstream rail of the pair of rails having a first multi-phase conductor orientation; a downstream connection extension extending from the downstream side and configured to be electrically coupled to a downstream rail of the pair of rails having a second multi-phase conductor orientation, the first multi-phase conductor orientation different than the second multi-phase conductor orientation; and an internal connection assembly configured to electrical couple corresponding current phases of the upstream rail and the downstream rail within the housing to electrically couple the pair of rails in series as a portion of the electrical busway system.

In some embodiments of the phase transposition device, each of the pair of rails is a three-phase alternating current (AC) rail comprising a plurality of phase conductors, the plurality of conductors comprising an A phase conductor, a B phase conductor, and a C phase conductor.

In various embodiments of the phase transposition device, the plurality of conductors are arranged in a different positional configuration in the first multi-phase conductor orientation compared with the second multi-phase conductor orientation.

In some embodiments of the phase transposition device, the first multi-phase conductor orientation comprises one of front-facing vertical (FFV), rear-facing vertical (RFV), front-facing horizontal (FFH), and rear-facing horizontal (RFH).

In various embodiments of the phase transposition device, the first multi-phase conductor orientation comprises one of a horizontal orientation or a vertical orientation, and the second multi-phase conductor orientation comprises an other one of the horizontal orientation or the vertical orientation.

In exemplary embodiments of the phase transposition device, the first multi-phase conductor orientation comprises one of a front-facing tap-off box (TOB) orientation or a rear-facing TOB orientation, and the second multi-phase conductor orientation comprises an other one of the front-facing TOB orientation or the rear-facing TOB orientation.

In some embodiments of the phase transposition device, the upstream connection extension comprises an upstream conductor assembly configured to be electrically coupled to the plurality of conductors of the upstream rail via a first coupling device, and the downstream connection extension comprises a downstream conductor assembly configured to be electrically coupled to the plurality of conductors of the downstream rail via a second coupling device.

In various embodiments of the phase transposition device, the upstream connection extension comprises a first internal connection assembly arranged within the housing and electrically coupled to the plurality of conductors of the upstream rail via the upstream conductor assembly, and the downstream connection extension comprises a second internal connection assembly arranged within the housing and electrically coupled to the plurality of conductors of the downstream rail via the downstream conductor assembly.

In some embodiments of the phase transposition device, each of the first internal connection assembly and the second internal connection assembly comprises a plurality of brackets electrically coupled to a respective one of the plurality of conductors of a corresponding rail of the pair of rails.

In various embodiments of the phase transposition device, the internal connection assembly comprises one of flexible conductive braids or casted connectors formed of a conductive material.

In one example, a phase transposition device is configured for connecting a first rail to a second rail to form a busway run in a three-phase electrical busway system, the first rail configured in a first orientation and the second rail configured in a second orientation, the first orientation different than the second orientation. The phase transposition device includes a body having a first connection side and a second connection side arranged opposite the first connection side; a first connection extension extending from the first connection side, the first connection extension having a first conductor assembly having a first plurality of conductors positioned corresponding to the first orientation; a second connection extension extending from the second connection side, the second connection extension having a second conductor assembly having a second plurality of conductors positioned corresponding to the second orientation; and an internal connection component configured to electrically couple corresponding conductors of the first plurality of conductors and the second plurality of conductors within an internal cavity of the body.

In some embodiments of the phase transposition device, the bus system comprising a three-phase busway system, wherein each of the first rail and the second rail include an A conductor, a B conductor, and a C conductor arranged according to a respective orientation.

In various embodiments of the phase transposition device, the first orientation comprising one of a vertical orientation or a horizontal orientation, and the second orientation comprising an orientation opposite of the first orientation.

In exemplary embodiments of the phase transposition device, the first orientation comprising one of a front-facing orientation or a rear-facing orientation, and the second orientation comprising an orientation opposite of the first orientation.

In some embodiments of the phase transposition device, the phase transposition device is configured to provide a 90-degree phase transposition between the first rail and the second rail.

In various embodiments of the phase transposition device, the phase transposition device is configured to provide a 360-degree phase transposition between the first rail and the second rail.

In some embodiments of the phase transposition device, the internal connection component comprises one or more of flexible copper or aluminum braids, solid copper connectors, or casted copper connectors.

In one example, an electrical busway system includes a power source configured to provide electrical power; a busway electrically coupled to the power source, the busway run including a pair of rails; and a phase transposition device for electrically connecting the pair of rails in a busway electrical system, the phase transposition device comprising: a housing having an upstream side and a downstream side arranged opposite the upstream side, an upstream connection extension extending from the upstream side and configured to be electrically coupled to an upstream rail of the pair of rails having a first multi-phase conductor orientation, a downstream connection extension extending from the downstream side and configured to be electrically coupled to a downstream rail of the pair of rails having a second multi-phase conductor orientation, the first multi-phase conductor orientation different than the second multi-phase conductor orientation, and an internal connection assembly configured to electrical couple corresponding current phases of the upstream rail and the downstream rail within the housing to electrically couple the pair of rails in series.

In some embodiments of the electrical busway system, the first multi-phase conductor orientation comprises one of front-facing vertical (FFV), rear-facing vertical (RFV), front-facing horizontal (FFH), and rear-facing horizontal (RFH).

In various embodiments of the electrical busway system, the first multi-phase conductor orientation comprises one of a horizontal orientation or a vertical orientation, and the second multi-phase conductor orientation comprises an other one of the horizontal orientation or the vertical orientation.

### BRIEF DESCRIPTION OF THE DRAWINGS

By way of example, features of the disclosed components and systems are described with reference to the accompanying drawings, in which:
FIGS. 1A-1C depict an illustrative example of a busway rail in accordance with the present disclosure;
FIG. 2 depicts a side view of an illustrative example of a vertical rail configuration in accordance with the present disclosure;
FIG. 3 depicts a side view of an illustrative example of a horizontal rail configuration in accordance with the present disclosure;
FIG. 4 depicts a sectioned view of a vertical rail configuration in accordance with the present disclosure;
FIGS. 5A and 5B depict block diagrams of an illustrative example of a phase transposition device in accordance with the present disclosure;
FIG. 6 depicts a side perspective view of an illustrative example of a phase transposition device in accordance with the present disclosure;
FIGS. 7A and 7B depict a perspective view of a first illustrative example of a phase transposition device in accordance with the present disclosure;
FIGS. 8A and 8B depict a perspective view of a second illustrative example of a phase transposition device in accordance with the present disclosure;
FIGS. 9A and 9B depict a perspective view of a third illustrative example of a phase transposition device in accordance with the present disclosure;
FIGS. 10A and 10B depict a perspective view of a fourth illustrative example of a phase transposition device in accordance with the present disclosure; and
FIG. 11 depicts illustrative examples of internal conductor connections for a phase transposition device in accordance with the present disclosure.

### DETAILED DESCRIPTION

Various features of a phase transposition device are described in the present disclosure, with reference to the accompanying drawings, in which one or more features of the phase transposition devices are shown and described. The various features described in the present disclosure and depicted in the accompanying drawings may be used independently of, or in combination, with each other. A phase transposition device as disclosed herein may be embodied in many different forms and should not be construed as being limited to the examples set forth herein. Rather, these examples are provided to convey certain features of the phase transposition device to those skilled in the art.

A phase transposition device according to some embodiments is configured to connect rails in a track-style busway system. In particular, a phase transposition device is capable of electrically and physically connecting two busway rails that have different orientations in series in a busway run.

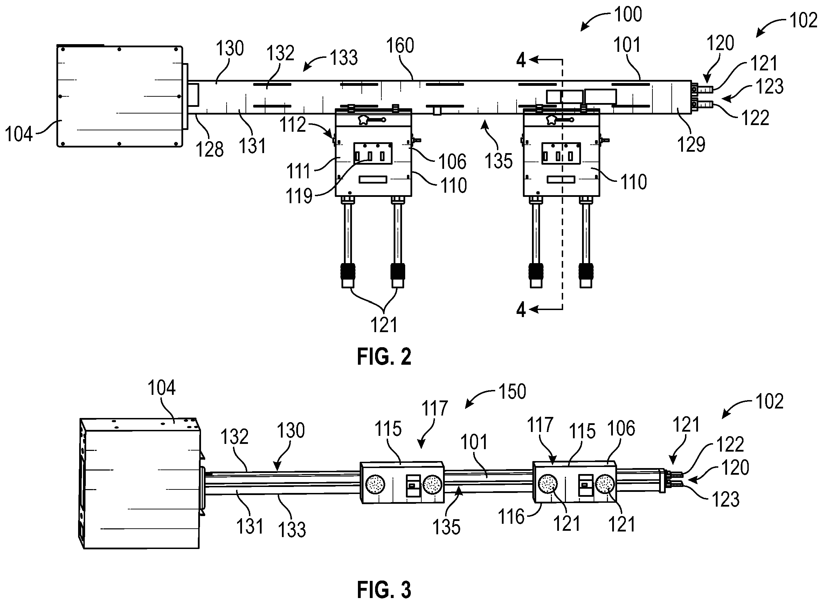

In various embodiments, the phase transposition device may be configured to electrically couple two rail segments having different orientations to provide a continuous circuit or run. For example, the phase transposition device may be configured to electrically couple a vertical rail (see, for example, FIG. 2) to a horizontal rail (see, for example, FIG. 3). In conventional systems, for example, that do not include a phase transposition device according to some embodiments, it would not be possible to couple three-phase rails with different orientations to provide a continuous run as described in the present disclosure. To the contrary, in a conventional system, an entirely new run (and the requisite connection equipment) would be required to provide continuous run segments having different orientations.

Directional phrases used herein, such as, for example, left, right, front, back, top, bottom, upwards, downwards, variations thereof, and derivatives thereof relate to the orientation of the elements shown in the drawings and are not limiting upon the claims unless expressly recited therein.

As used herein, employed herein, when ordinal terms such as "first" and "second" are used to modify a noun, such use is simply intended to distinguish one item from another, and is not intended to require a sequential order unless specifically stated.

As employed herein, the statement that two or more parts or components are "coupled" means that the parts are joined or operate together either directly or indirectly, for instance, indirectly through one or more intermediate parts or components, so long as a link occurs. As used herein, "fixedly coupled" or "fixed" means that two components are coupled so as to move as one while maintaining a constant orientation relative to each other.

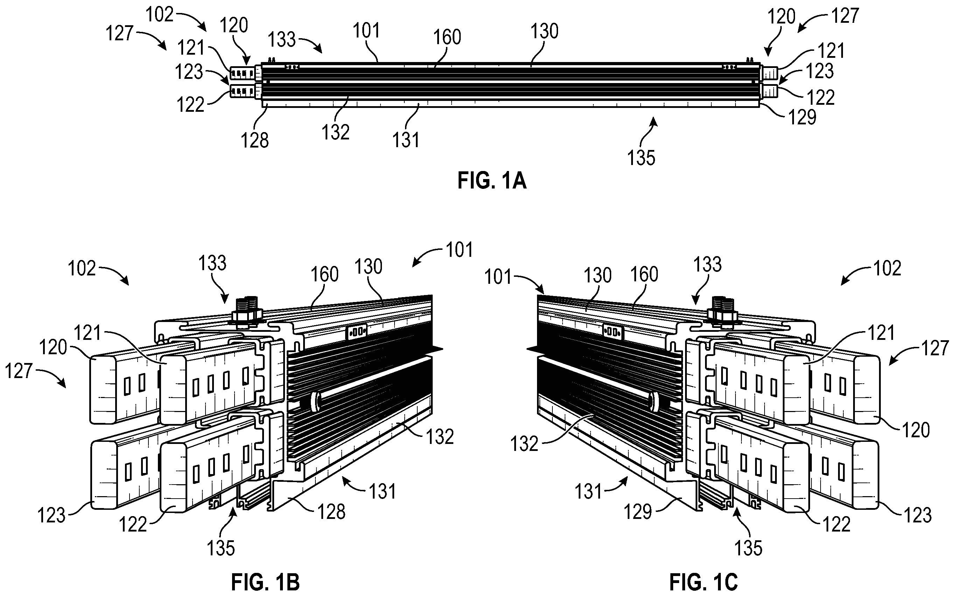

FIGS. 1A-1C depict an illustrative example of a busway rail in accordance with the present disclosure. More specifically, FIG. 1A depicts a side view of the busway rail 101, FIG. 1B depicts a front perspective view (at end 128) of the busway rail 101, and FIG. 1C depicts a back perspective view (at end 129) of the busway rail 101. The rail 101 may be the same or substantially similar to a standard track-style busway rail. In one non-limiting example, the rail 101 may be the same or substantially similar to a standard rail used in the PowerWave 2 bus system provided by Eaton Corporation PLC of Dublin, Ireland. However, phase transposition devices are not limited to the aforementioned types of rails and may be used with any currently-existing or future-developed busway rails capable of operating with a phase transposition devices of the present disclosure. In addition, although a three-phase circuit is used in some examples of a multi-phase busway, embodiments are not so limited, as the phase transposition device may be configured to work with other multi-phase systems, including, for example and without limitation, a two-phase or five-phase system. In addition, one or more other busbars, conductors, or lines may be included in illustrative multi-phase systems, such as a ground conductor or wire.

The rail 101 may have a length of about 1 ft to about 3 ft. In various embodiments, the rail 101 may be configured to be joined with other rails to form a run of about 2 feet to about 12 feet. In some embodiments, the rail 101 may have an Ampere rating of about 250 A to about 1000 A. In exemplary embodiments, the rail 101 may be configured for neutral 100% or 150% for 250-400 A and neutral 100% for 600-1000 A. The physical and rating characteristics of the rail 101 are provided in the present disclosure for illustrative purposes. Embodiments are not limited in this context.

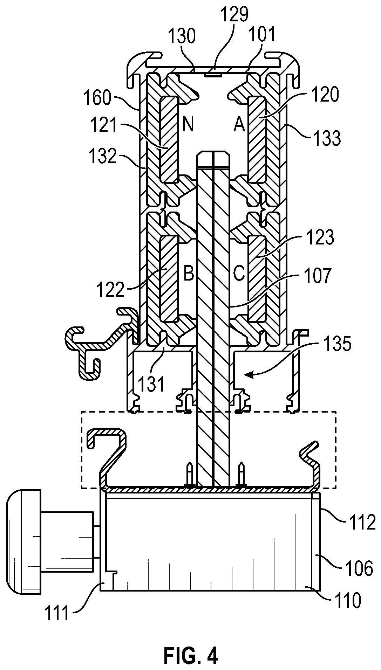

The rail 101 includes a housing, enclosure, casing, or body 160 having a first, top, or connection side 130, a second or bottom side 131 (arranged opposite the first side 130), a third or right side 132 (perpendicular side wall connecting sides 130 and 131), a fourth or left side 133 (arranged opposite the third side 132), a first end 128, and a second end 129. Side 130 is referred to as a connection side due to a channel 135 (see FIGS. 3 and 4) formed on side 130 that is used to electrically connect tap-off boxes (TOBs) to the rail 101 (see FIG. 4).

The rail 101 depicted in FIGS. 1A-1C has a horizontal, front-facing orientation (see, for example, FIG. 2) and the directional references for portions 128-133 are in reference to a horizontal, front facing orientation.

The rail 101 may be a standard multi-phase rail having a conductor assembly 102 formed of a plurality of phase conductors 120-123. For example, in some embodiments, the rail 101 may be configured for use in a three-phase power system. The phase conductors 120-123 may include an A conductor, a B conductor, a C conductor, and, optionally, a neutral or N conductor. For example, in some embodiments, phase conductor 120 may be an A conductor, phase conductor 121 may be an N conductor, phase conductor 122 may be a C conductor, and phase conductor 123 may be a B conductor. However, the phase conductors 120-123 may be arranged in different configurations and/or may be associated with different conductor phases (for instance, phase conductor 120 may be an A conductor, phase conductor 121 may be an N conductor, phase conductor 122 may be a B conductor, and phase conductor 123 may be a C conductor).

The phase conductors 120-123 extend longitudinally through the housing 160 of the rail 101. Each phase conductor 120-123 has an internal portion extending through the housing 160 of the rail and opposing external portions 127 extending outside of the housing 160. The external portions 127 are used to form electrical connections between the rail 101 and other components, including, without limitation, phase transposition devices, other rails (via a coupler or coupling device), end feeds, elbows, tees, and/or the like. Each of phase conductors 120-123 includes a first end portion 127 extending from the first end 128, a second end portion 127 extending from the second end 129, and an internal portion arranged therebetween enclosed within the housing 160.

The phase conductors 120-123 may be arranged and spaced in a substantially cuboid or rectangular prism shape. For example, as shown in FIG. 1B, when the rail 101 is in the horizontal, front-facing orientation and viewed from end 128, the A phase conductor 120 may be in the upper left, the N phase conductor 121 may be in the upper right, the B phase conductor 122 may be in the lower right, and the C phase conductor 123 may be in the lower left. As shown in FIG. 1C, when the rail 101 is in the horizontal, front-facing orientation and viewed from end 129, the A phase conductor 120 may be in the upper right, the N phase conductor 121 may be in the upper left, the B phase conductor 122 may be in the lower left, and the C phase conductor 123 may be in the lower right. The particular spatial arrangement of the conductors 120-123 may be different in different embodiments (for example, the B phase and the C phase conductors may be switched).

In a conventional single rail busway, electrical connections are formed between phase conductors of continuous rails connected in series. For instance, in a single rail busway, the phase conductors 120-123 of rail 101 would be electrically coupled to the corresponding phase conductors of a subsequent rail (not shown) in series in a bus run (for instance, phase conductor A of rail 101 would be electrically coupled to phase conductor A of the next rail, phase conductor B of rail 101 would be electrically coupled to phase conductor B of the next rail, and so on).

FIG. 2 depicts a side view of an illustrative example of a vertical rail configuration and FIG. 3 depicts a side view of a horizontal rail configuration in accordance with the present disclosure. More specifically, FIG. 2 depicts the rail 101 in a vertical, front-facing orientation and FIG. 3 depicts the rail 101 in a horizontal, front-facing orientation.

As shown in FIGS. 2 and 3, the rail 101 may be configured to be coupled to various devices within a busway, such as a power feed 104. In some embodiments, the power feed 104 may be an end feed providing an interface for the connection of power, grounding, and/or communications for a bus run. In various embodiments, one or more additional rails (not shown) may be coupled to the power feed 104, such as a starter rail or another standard rail. For example, a starter rail may be arranged between the power feed 104 and the rail 101. In various embodiments, the rail 101 may be coupled to other rails via a coupler device (not shown) that is configured to join starter rails, standard rails, elbows, tees, and/or other components into a bus run. Standard couplers are configured to join rails and other run elements that have the same orientation.

As shown in FIG. 2, a TOB 110 may be electrically coupled to the rail 101. A vertical tap-off box 110 is configured to be coupled to vertically-orientated rails 101. The TOB 110 may include a housing 106 having a front (or front breaker) side 111 with breakers 119 and a back or rear (or rear breaker) side 112, opposite the front side 111. FIG. 4 depicts a sectioned view of a vertical rail configuration in accordance with the present disclosure through line 4 of FIG. 2. As shown in FIG. 4, the rail 101 includes a channel 135 formed in the second side 131. In a horizontal orientation, the channel 135 is on the bottom of the rail (in a vertical plane on the side 131 facing the ground). A mast 107 extends from the body 106 of the TOB 110 which is electrically coupled to the circuitry within the body 106 and includes connection elements (not shown) that electrically couple with corresponding conductors 120-123 when inserted into the channel 135 and properly seated within the rail 101. In this manner, a TOB 110 is electrically connected to a rail 101 to receive electrical power from the conductors 120-123 of the rail 101. A connected top-off box 110 may draw power from the rail 101 to provide power to devices, equipment, and/or the like that are coupled to receptacles 121 of the tap-off box 110.

Referring to FIG. 3, therein is depicted the rail 101 in a horizontal configuration 150. In the horizontal configuration 150, the rail 101 is orientated such that the channel 135 is facing sideways (in a horizontal plane). Horizontal TOBs 115 are configured to be coupled to rails 101 in the horizontal configuration 150. The TOBs may include a front (or front breaker) side 116 and a back or rear (or rear breaker) side 117 and may be electrically coupled to the rail 101 in the horizontal configuration 150. Similar to the TOB 110 depicted in FIG. 4, the TOB 115 includes a mast (not shown) the same or similar to mast 107 that extends into the channel 135 to electrically couple the TOB 115 to the conductors 120-123.

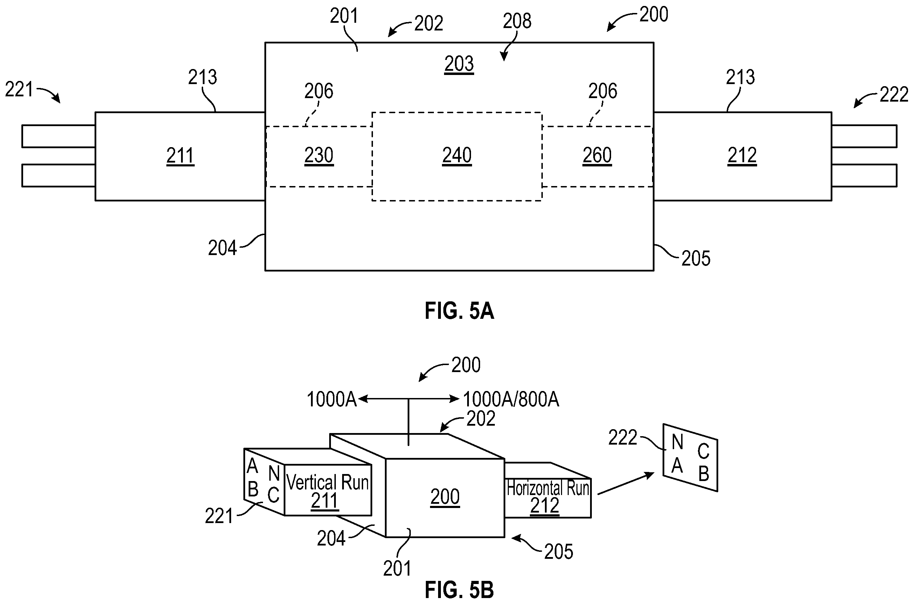

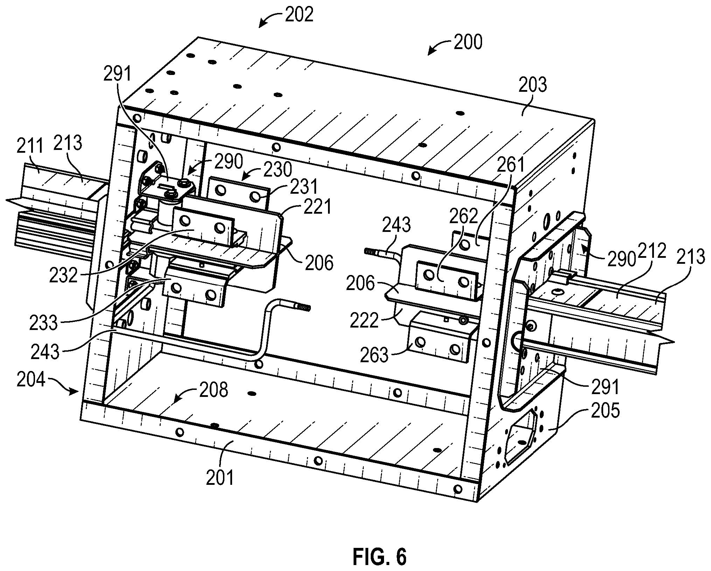

FIGS. 5A and 5B depict block diagrams of an illustrative example of a phase transposition device in accordance with the present disclosure. FIG. 6 depicts a side perspective view of an illustrative example of a phase transposition device in accordance with the present disclosure.

As shown in FIGS. 5A, 5B, and 6, a phase transposition device 200 may include a body or housing 203 having a front side 201, a back side 202, a first or upstream connection side 204, and a second or downstream connection side 205 arranged opposite the first connection side 204. In general, the upstream connection side 204 is arranged upstream in the flow of current (from left-to-right in FIGS. 5A and 7A-10B) with respect to the downstream connection side 205. In various embodiments, each of the first connection side 204 and the second connection side 205 are configured for coupling the phase transposition device 200 to a different rail.

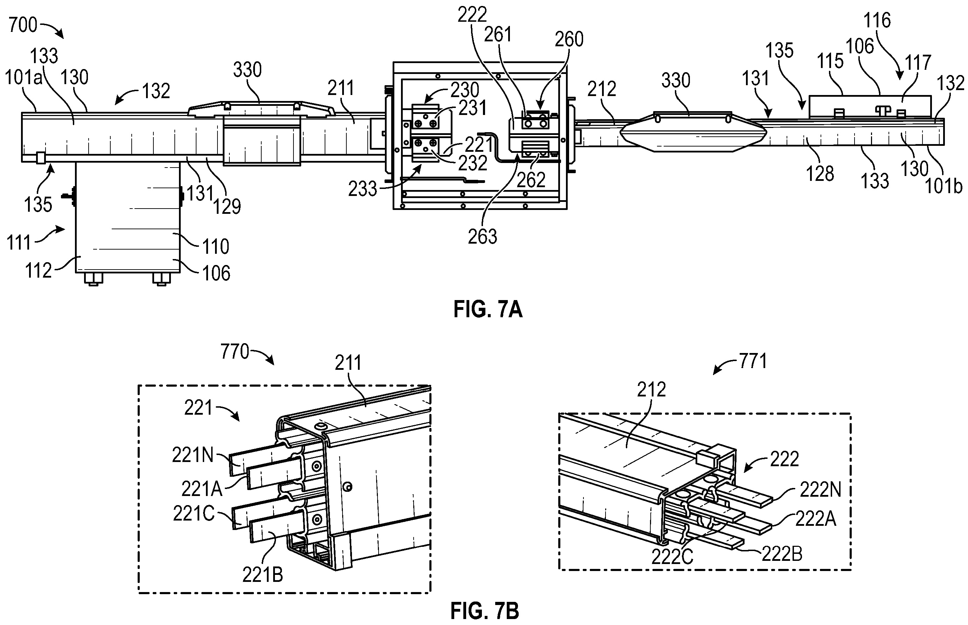

A first or upstream connection extension 211 and a second or downstream connection extension 212 are included for coupling rails 101 to the phase transposition device 200. Each connection extension 211 and 212 includes a housing 213 extending from the first connection side 204 and the second connection side 205, respectively. Each of the connection extensions 211 and 212 includes a conductor assembly 221 and 222 extending through the connection extension 211 and 212. The conductor assemblies 221 and 222 include conductors (221A, 221B, 221C, and 221N for assembly 221 and 222A, 222B, 222C, and 222N for assembly 222; see FIGS. 7A-10B) corresponding to conductors 120-123 of the rails. A portion of the conductor assemblies 211 and 212 are external to the body 203 and the housing 213, exposed for facilitating electrical coupling to conductors 120-123 of a respective rail 101.

In some embodiments, each of the connection extensions 211 and 212 includes an internal connection assembly 230 and 260. The connection assemblies 230 and 260 are configured to be electrically coupled via an internal connection assembly or component 240.

In various embodiments, the conductor assemblies 221 and 222 include conductors in a different arrangement depending on the orientation of the rail that is configured to be coupled to the corresponding connection extension 211 and 212. For instance, referring specifically to FIG. 5B, connection extension 211 may be configured to connect to a vertical run and may have a conductor assembly 221 with a clockwise configuration of A-N-C-B (i.e., clockwise starting with the upper-left conductor when facing the connection extension 211), with the A conductor positioned on the top left (when facing the connection extension 211), the B conductor positioned on the bottom left, the C conductor positioned on the bottom right, and the N conductor positioned on the upper right.

In various embodiments, the internal connection component (or assembly of components) 240 may be configured to electrically couple the different phases of the internal portions 206 of the conductor assemblies 221 and 222 with the related phase conductors connected to each other. For instance, conductor A of conductor assembly 221 is connected internally to conductor A of conductor assembly 222, conductor B of conductor assembly 221 is connected internally to conductor B of conductor assembly 222, and so on.

A phase transposition device 200 according to various embodiments may be configured to connect two rails with different orientations. In some embodiments, the rail orientations may include front-facing vertical, rear-facing vertical, front-facing horizontal, and rear-facing horizontal (see, for example, FIGS. 7A-10B). In general, in a horizontal orientation, the channel 135 is facing downward toward the ground and the neutral phase (phase N or conductor 121) is facing upwards, opposite the ground and the channel 135. In general, in a vertical orientation, the rail 101 is rotated 90° with respect to the horizontal orientation. In the vertical orientation, the channel 135 is facing a plane parallel to the ground (for example, either into or out of the page of FIG. 3). In a front-facing orientation, the front or breaker side of a TOB is facing outward (for example, side 111 of TOB 110 is facing out of the page of FIG. 2 and side 116 of TOB 115 is facing out of the page of FIG. 3). In a rear-facing orientation, the back side of a TOB is facing outward (for example, side 112 of TOB 110 is facing out of the page of FIG. 7A and side 117 of TOB 115 is facing out of the page of FIG. 7A).

Referring to FIG. 6, the internal connection assemblies 230 and 260 each include a set of connection components 231-233 and 261-263, respectively. The connection components 231-233 and 261-263 are connected to respective conductors of the conductor assemblies 221 and 222, respectively. In some embodiments, the connection components 231-233 and 261-263 may be or may include individual brackets, jumpers, or other conductive structures. In some embodiments, the connection components 231-233 and 261-263 may include one conductive structure for each of phases A-C and a neutral wire 243 for the neutral phase (phase N).

The connection components 231-233 are coupled to corresponding phases of connection components 261-263. For example, if, due to the particular orientation of rails 101 coupled via the phase transposition device 200, component 231 is associated with phase A and component 263 is associated with phase A, then the internal connection assembly 240 would electrically couple component 231 and component 263 within the phase transposition device 200. In this manner, the phase A circuit may be maintained through the rail coupled to extension 211, the phase transposition device, and out through the rail coupled to extension 212. The phase transposition device 200 would be configured to connect the remaining corresponding connection components 232, 233, 262, and 263 for the corresponding phases.

A phase transposition device 200 may include various components, including, without limitation, expansion joints and reducers. For example, an expansion joint and reducer may be or may include copper or aluminum braids connections. In another example, an expansion joint and reducer may be or may include copper or aluminum cable connections. In various embodiments, a reducer may be or may include copper or aluminum busbar connections. In some embodiments, a phase transposition device may be, may include, or may be used as a repeater. A repeater is a device configured to provide additional power and run distance in a busway system. For example, a repeater may add an additional 20 W and 328 ft (100 m) to the power and/or communication cable length potential of a busway run.

FIGS. 7A and 7B depict a perspective view of an illustrative example of a phase transposition device in accordance with the present disclosure. As shown in FIGS. 7A and 7B, a phase transposition device 200 may be configured to provide a 90-degree transposition. For example, the phase transposition device 200 may be configured to implement a busway run 700 connecting a rear-facing horizontal rail (a first or upstream rail) 101a with a rear-facing vertical rail (a second or downstream rail) 101b. In some embodiments, a coupler 330 may be used to couple the connection extensions 211 and 212 to the rails 101a and 101b. The coupler 330 may be configured to electrically couple the phase conductors 120-123 with the conductors 221A-221N in series.

Referring specifically to FIG. 7B, therein is depicted detailed views 770 and 771 of the conductor assemblies 221 and 222, respectively. The conductor assemblies 221 and 222 include conductors 221A, 221B, 221C, and 221N and 222A, 222B, 222C, and 222N, respectively, in an arrangement corresponding to the conductor arrangement of the rails 101a and 101b.

Conductor assembly 221 of view 770 has a rear-facing horizontal orientation. The clockwise configuration of conductors includes 221N, 221A, 221B, and 221C to correspond with the arrangement of the conductors 120-123 of rail 101a. Conductor assembly 221 has a positional configuration of the A conductor 221A positioned on the top right (when facing the connection extension 211), the B conductor 221B positioned on the bottom right, the C conductor 221C positioned on the bottom left, and the N conductor 221N positioned on the upper left, which corresponds with the conductor arrangement of the rail 101a configured to be coupled to the connection extension 211.

Conductor assembly 222 of view 771 has a rear-facing vertical orientation, with a clockwise configuration of conductors 222N, 222A, 222B, and 222C to correspond with the arrangement of the conductors 120-123 of rail 101b, with a positional configuration of the N conductor 221N positioned on the top right (when facing the connection extension 212), the A conductor 221A positioned on the bottom right, the B conductor 221B positioned on the bottom left, and the C conductor 221C positioned on the upper left, which corresponds with the conductor arrangement of the rail 101b configured to be coupled to the connection extension 212.

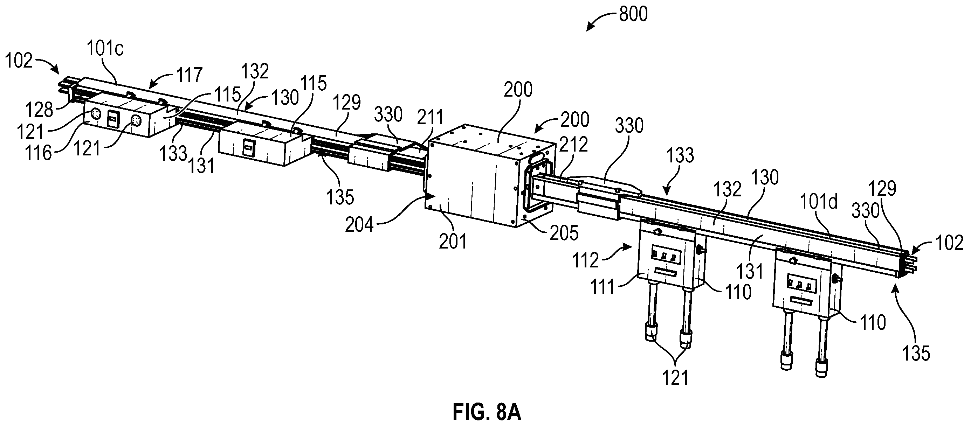

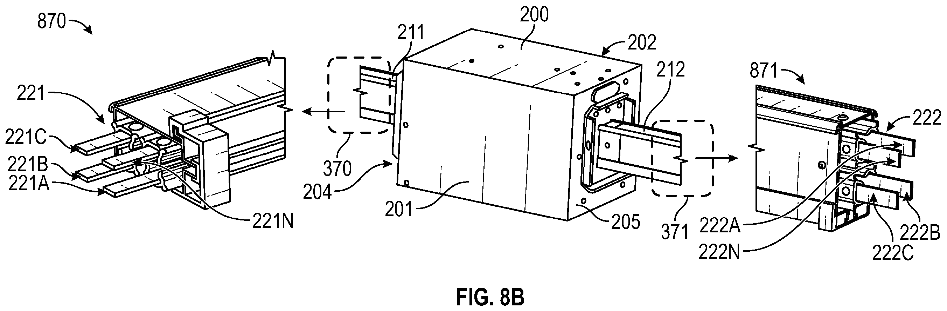

FIGS. 8A and 8B depict a perspective view of an illustrative example of a phase transposition device in accordance with the present disclosure. As shown in FIGS. 8A and 8B, a phase transposition device 200 may be configured to provide a 90-degree transposition. For example, the phase transposition device 200 may be configured to implement a busway run 800 connecting a front-facing horizontal rail (a first or upstream rail) 101c with a front-facing vertical rail (a second or downstream rail) 101d. In some embodiments, a coupler 330 may be used to couple the connection extensions 211 and 212 to the rails 101c and 101d.

Referring specifically to FIG. 8B, therein is depicted detailed views 370 and 371 of the conductor assemblies 221 and 222, respectively. The conductor assemblies 221 and 222 include conductors 221A, 221B, 221C, and 221N and 222A, 222B, 222C, and 222N, respectively, in an arrangement corresponding to the conductor arrangement of the rails 101c and 101d configured to be electrically coupled to the conductor assemblies 221 and 222.

Conductor assembly 221 of view 870 has a front-facing vertical orientation, with a positional configuration of the N conductor 221N positioned on the top right (when facing the connection extension 211), the A conductor 221A positioned on the bottom right, the B conductor 221C positioned on the bottom left, and the C conductor 221C positioned on the upper left, which corresponds with the conductor arrangement of the rail 101c configured to be coupled to the connection extension 211.

Conductor assembly 221 of view 871 has a front-facing horizontal orientation, with a positional configuration of the A conductor 221A positioned on the top right (when facing the connection extension 212), the B conductor 221B positioned on the bottom right, the C conductor 221C positioned on the bottom left, and the N conductor 221N positioned on the upper left, which corresponds with the conductor arrangement of the rail 101d configured to be coupled to the connection extension 212.

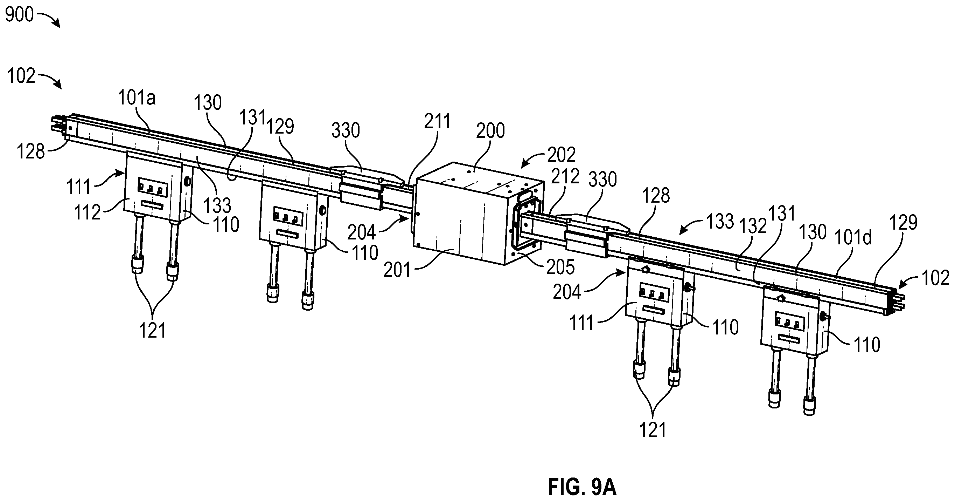

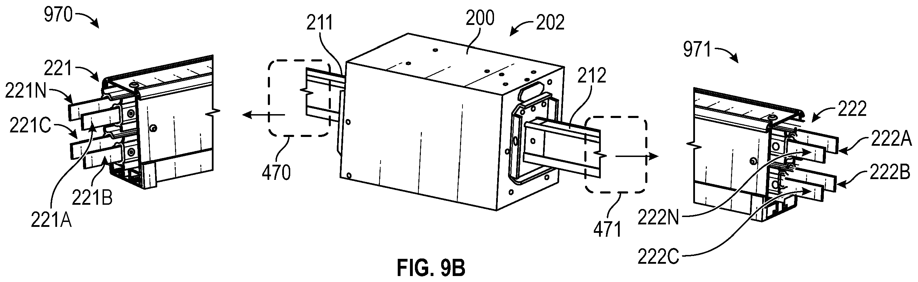

FIGS. 9A and 9B depict a perspective view of an illustrative example of a phase transposition device in accordance with the present disclosure. As shown in FIGS. 9A and 9B, a phase transposition device 200 may be configured to provide a 360-degree vertical transposition. For example, the phase transposition device 200 may be configured to implement a busway run 900 connecting a rear-facing vertical rail (a first or upstream rail) 101a with a front-facing vertical rail (a second or downstream rail) 101d.

Referring specifically to FIG. 9B, therein is depicted detailed views 970 and 971 of the conductor assemblies 221 and 222, respectively in an arrangement corresponding to the conductor arrangement of the rails 101a and 101d.

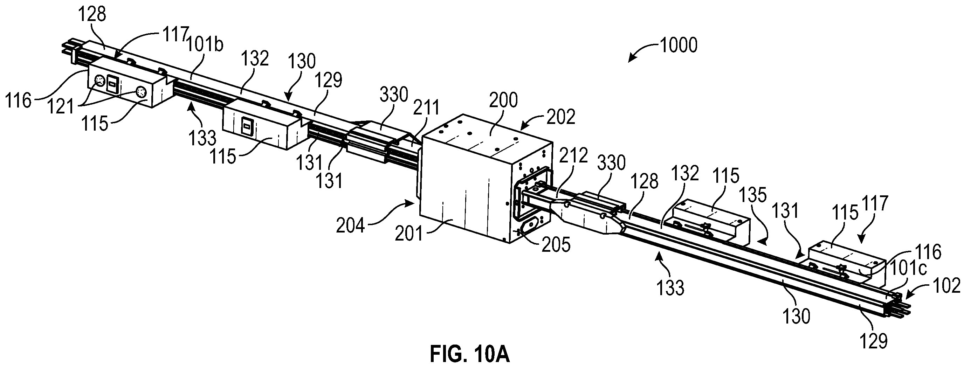

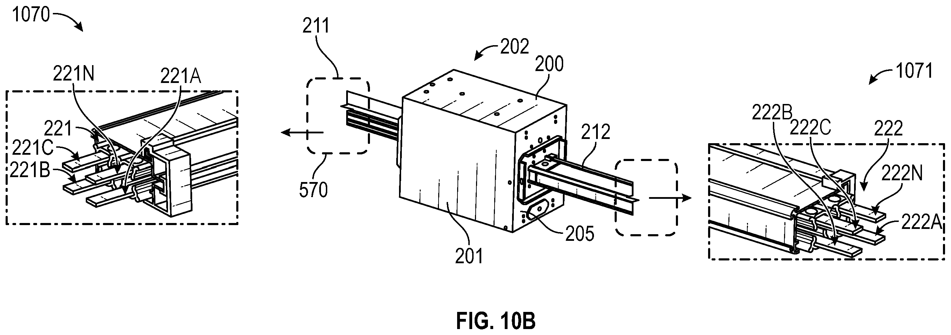

FIGS. 10A and 10B depict a perspective view of an illustrative example of a phase transposition device in accordance with the present disclosure. As shown in FIGS. 10A and 10B, a phase transposition device 200 may be configured to provide a 360-degree horizontal transposition. For example, the phase transposition device 200 may be configured to implement a busway run 1000 connecting a front-facing horizontal rail (a first or upstream rail) 101b with a rear-facing horizontal rail (a second or downstream rail) 101c.

Referring specifically to FIG. 10B, therein is depicted detailed views 1070 and 1071 of the conductor assemblies 221 and 222, respectively in an arrangement corresponding to the conductor arrangement of the rails 101b and 101c.

Although FIGS. 7A-10B depict particular orientation combinations and degrees of phase transposition, embodiments are not so limited, as phase transposition devices according to the present disclosure are capable of electrically coupling different orientation combinations. For example, a phase transposition device may be configured to couple a rail having a rear-facing horizontal orientation with a front-facing vertical orientation, and so on.

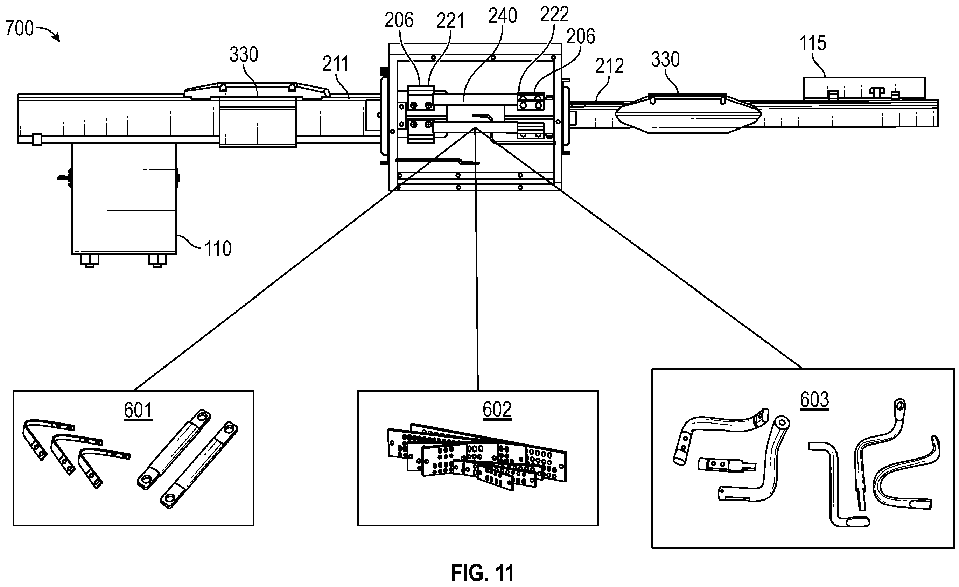

FIG. 11 depicts illustrative examples of internal conductor connection configurations for a phase transposition device in accordance with the present disclosure. The internal connection assembly 240 may have one or more configurations, which may be used individually or in combination within the same phase transposition device 200. One non-limiting internal connection component may include flexible braids 1101 formed of one or more metals including, without limitation, aluminum, copper, alloys thereof, and/or combinations thereof. Another non-limiting internal connection component may include solid connectors 1102, for instance, using formed or machined parts. A further non-limiting internal connection component may include casted connectors 1103, for instance, formed via one or more casting methods. In some embodiments, solid connectors 1102 and/or casted connectors 1103 may be formed of copper.

The connectors 1103 may be configured, formed, shaped, and/or the like to electrically couple the interior portions 206 of the conductor assemblies 221 and 222. For instance, conductor A of conductor assembly 221 is connected internally to conductor A of conductor assembly 222, conductor B of conductor assembly 221 is connected internally to conductor B of conductor assembly 222, and so on.

In some embodiments, a phase transposition device 200 may be preconfigured with the extensions 211 and 212 in specified orientations and with the connection assemblies 230 and 260 properly connected (i.e., the current phases of assembly 230 connected to the corresponding current phases of assembly 260). For example, a manufacturer may produce preconfigured phase transposition devices 200, such as a RFH-FFH, RFH-RFV, and so on. In this manner, a user can select the associated phase transposition device 200 for a particular rail orientation connection.

In various embodiments, the phase transposition device 200 may be modular. For example, a phase transposition kit or assembly may include the body 203, the extensions 211 and 212, and the internal connection component(s) 240. The body 203 may be configured to allow for the extensions 211 and 212 to be coupled to and within the body 203 in any orientation. In this manner, a user can configure the phase transposition device 200 on-site based on a specific need. For example, the user can connect the extension 211 to the first connection side 204 in a RFH orientation and the extension 212 to the second connection side 205 in a FFV orientation and use the internal connection components 240 to make the corresponding phase connections between connection assemblies 230 and 260. In a modular embodiment, the housing 203 may include extension openings 290 and the extensions 211 and 212 may include flanges 291 that may be coupled to the housing 203 via fasteners in any orientation.

While specific embodiments have been described in detail, it will be appreciated by those skilled in the art that various modifications and alternatives to those details could be developed in light of the overall teachings of the present disclosure. Accordingly, the particular arrangements disclosed are meant to be illustrative only and not limiting as to the scope of disclosed technologies which is to be given the full breadth of interpretation and any and all equivalents thereof.

## Claims

1. A phase transposition device for connecting a pair of rails in a busway electrical system, comprising:
a housing having an upstream side and a downstream side arranged opposite the upstream side;
an upstream connection extension extending from the upstream side and configured to be electrically coupled to an upstream rail of the pair of rails having a first multi-phase conductor orientation;
a downstream connection extension extending from the downstream side and configured to be electrically coupled to a downstream rail of the pair of rails having a second multi-phase conductor orientation, the first multi-phase conductor orientation different than the second multi-phase conductor orientation; and
an internal connection assembly configured to electrical couple corresponding current phases of the upstream rail and the downstream rail within the housing to electrically couple the pair of rails in series as a portion of the electrical busway system.

2. The phase transposition device of claim 1, wherein each of the pair of rails is a three-phase alternating current (AC) rail comprising a plurality of phase conductors, the plurality of conductors comprising an A phase conductor, a B phase conductor, and a C phase conductor.

3. The phase transposition device of claim 2, wherein the plurality of conductors are arranged in a different positional configuration in the first multi-phase conductor orientation compared with the second multi-phase conductor orientation.

4. The phase transposition device of claim 2, wherein the first multi-phase conductor orientation comprises one of front-facing vertical (FFV), rear-facing vertical (RFV), front-facing horizontal (FFH), and rear-facing horizontal (RFH).

5. The phase transposition device of claim **1,** wherein the first multi-phase conductor orientation comprises one of a horizontal orientation or a vertical orientation, and the second multi-phase conductor orientation comprises an other one of the horizontal orientation or the vertical orientation.

6. The phase transposition device of claim **1,** wherein the first multi-phase conductor orientation comprises one of a front-facing tap-off box (TOB) orientation or a rear-facing TOB orientation, and the second multi-phase conductor orientation comprises an other one of the front-facing TOB orientation or the rear-facing TOB orientation.

7. The phase transposition device of claim 1, wherein:
the upstream connection extension comprises an upstream conductor assembly configured to be electrically coupled to the plurality of conductors of the upstream rail via a first coupling device, and
the downstream connection extension comprises a downstream conductor assembly configured to be electrically coupled to the plurality of conductors of the downstream rail via a second coupling device.

8. The phase transposition device of claim 7, wherein:
the upstream connection extension comprises a first internal connection assembly arranged within the housing and electrically coupled to the plurality of conductors of the upstream rail via the upstream conductor assembly, and
the downstream connection extension comprises a second internal connection assembly arranged within the housing and electrically coupled to the plurality of conductors of the downstream rail via the downstream conductor assembly.

9. The phase transposition device of claim 8, wherein each of the first internal connection assembly and the second internal connection assembly comprises a plurality of brackets electrically coupled to a respective one of the plurality of conductors of a corresponding rail of the pair of rails.

10. The phase transposition device of claim **1,** wherein the internal connection assembly comprises one of flexible conductive braids or casted connectors formed of a conductive material.

11. An electrical busway system, comprising:
a power source configured to provide electrical power;
a busway electrically coupled to the power source, the busway run including a pair of rails; and
a phase transposition device for electrically connecting the pair of rails in a busway electrical system, the phase transposition device comprising:
a housing having an upstream side and a downstream side arranged opposite the upstream side,
an upstream connection extension extending from the upstream side and configured to be electrically coupled to an upstream rail of the pair of rails having a first multi-phase conductor orientation,
a downstream connection extension extending from the downstream side and configured to be electrically coupled to a downstream rail of the pair of rails having a second multi-phase conductor orientation, the first multi-phase conductor orientation different than the second multi-phase conductor orientation, and
an internal connection assembly configured to electrical couple corresponding current phases of the upstream rail and the downstream rail within the housing to electrically couple the pair of rails in series.

12. The electrical busway system of claim 18, wherein the first multi-phase conductor orientation comprises one of front-facing vertical (FFV), rear-facing vertical (RFV), front-facing horizontal (FFH), and rear-facing horizontal (RFH).

13. The electrical busway system of claim 18, wherein the first multi-phase conductor orientation comprises one of a horizontal orientation or a vertical orientation, and the second multi-phase conductor orientation comprises an other one of the horizontal orientation or the vertical orientation.

14. The electrical busway system of claim 18, wherein the phase transposition device is configured to provide a 90-degree phase transposition between the pair of rails.

15. The electrical busway system of claim 18, wherein the phase transposition device is configured to provide a 360-degree phase transposition between the pair of rails.
